## Europäisches Patentamt

## European Patent Office

## Office européen des brevets

(19)

(11) Veröffentlichungsnummer: **0 056 795**
**B1**

(12) **EUROPÄISCHE PATENTSCHRIFT**

(45) Veröffentlichungstag der Patentschrift:
28.03.84

(21) Anmeldenummer: **82890003.5**

(22) Anmeldetag: **13.01.82**

(51) Int. Cl.³: **C 03 C 17/22**

(54) **Verfahren und Vorrichtung zum Beschichten von Gläsern.**

(30) Priorität: **21.01.81 AT 229/81**

(43) Veröffentlichungstag der Anmeldung:
**28.07.82 Patentblatt 82/30**

(45) Bekanntmachung des Hinweises auf die Patenterteilung:
**28.03.84 Patentblatt 84/13**

(84) Benannte Vertragsstaaten:
**AT BE DE FR GB IT**

(56) Entgegenhaltungen:
**FR - A - 2 197 826**

(73) Patentinhaber: **Glasfabriken-Ausrüstergesellschaft m.b.H., Heiliggeiststrasse 9, A-6020 Innsbruck (AT)**

(72) Erfinder: **Harcuba, Siegfried, Hungerburg, A-6020 Inssbruck (AT)**

(74) Vertreter: **Atzwanger, Richard Dipl.Ing., Patentanwälte Dipl.-Ing. Anton Atzwanger, Dipl.-Ing. Richard Atzwanger Mariahilfer Strasse 1c, A-1060 Wien (AT)**

Verfahren und Vorrichtung zum Beschichten von Gläsern

Die Erfindung betrifft ein Verfahren bzw. eine Vorrichtung zum Beschichten von Gläsern, insbesondere von Flachglas oder Hohlglas, um deren UV- oder Infrarot-Durchlässigkeit zu vermindern bzw. um diese gegen chemische Einflüsse widerstandsfähig zu machen.

Es ist bekannt geworden, derartige Beschichtungen einer Glasoberfläche, insbesondere von gewalztem Flachglas, durch Aufsprühen einer Lösung von Metallchloriden in organischer Säure unter freiem Zutritt von Luftsauerstoff durchzuführen. Beispielsweise wird hierfür dreiwertiges Eisenchlorid ($Fe_2Cl_3$) unter Siedetemperatur in reiner Essigsäure gelöst. Der Nachteil dieses bekannten Verfahrens liegt jedoch darin, dass infolge des Zutrittes von Luftsauerstoff zur Lösung schon während ihrer Herstellung und bevor diese bis zur Düse gelangt ist, sich in den Behältern, in welchen die Lösung hergestellt wird, in den Leitungen zur Düse und in der Düse naszierende Salzsäure bildet, die eine Zerstörung der Behälter, der Leitungen und der Düsen bedingt. Insbesondere verursacht die naszierende Salzsäure auch eine Änderung des Farbeffektes, der durch die Lösung bewirkt werden soll, wodurch keine Gleichmässigkeit in der Farbtönung gewährleistet werden kann.

Weiters unterliegt die Glasoberfläche unterschiedlichen thermischen Strömungen und strahlt sie Wärme ab, die jedoch während und nach der Beaufschlagung mit der Lösung zur vollständigen Verbrennung der organischen Säure und zur Diffusion der freiwerdenden Metallionen, aus welcher im Austausch alkalische Ionen austreten, benötigt wird. Auch hierdurch werden Ungleichmässigkeiten in der Farbtönung verursacht. Aufgrund dieser Nachteile ist es nicht möglich, ein Verfahren mit in organischer Säure gelösten Metallchloriden anzuwenden, durch das ein Glas für UV-bzw. Infrarot-Strahlung undurchlässig gemacht werden soll, ohne dass die Durchlässigkeit für das sichtbare Lichtspektrum stark beeinträchtigt wird. Es war bislang auch nicht möglich, eine Beschichtung herzustellen, die gegenüber einer Reinigung mittels alkalischer Mittel hinreichend resistent ist.

Da bei bekannten Einrichtungen zudem Ungleichmässigkeiten in der Farbtönung dadurch bedingt wurden, dass die Lösung nicht hinreichend gleichmässig aufgesprüht wurde, liegt der Erfindung weiters die Aufgabe zugrunde, eine Vorrichtung zu schaffen, durch die in einfacher Weise eine Einstellung der Sprühdüsen möglich ist, wodurch das Aufsprühen veränderbar ist.

Der Erfindung liegt demnach die Aufgabe zugrunde, ein Verfahren und eine Vorrichtung zu schaffen, durch welche die angeführten Nachteile bekannter Verfahren bzw. bekannter Vorrichtungen ausgeschlossen werden. Durch die Erfindung soll demnach ein Verfahren geschaffen werden, durch das unter Verwendung von in organischer Säure gelösten Metallchloriden Beschichtungen von heissen Glasoberflächen möglich sind, ohne dass eine Korrosion der Metallteile der Beschichtungsvorrichtung verursacht wird und das Glas unterschiedliche Farbtönung aufweist.

Dies wird erfindungsgemäss dadurch erzielt, dass die Herstellung und die Förderung der Beschichtungsflüssigkeit bis zur Beschichtungsdüse unter Ausschluss von Sauerstoff erfolgt. Vorzugsweise stehen die Behälter zur Aufnahme der Beschichtungsflüssigkeit unter Druck eines inerten Gases. Weiters erfolgt vorzugsweise die Einbringung der Chemikalien in die Behälter für die Beschichtungsflüssigkeit durch luftdichte Förderschleusen hindurch.

Bei einer erfindungsgemässen Vorrichtung zur Durchführung dieses Verfahrens ist eine Einrichtung zur Herstellung der Beschichtungsflüssigkeit unter Ausschluss von Sauerstoff vorgesehen, von der aus eine Beschichtungseinrichtung speisbar ist. Dabei kann die Beschichtungseinrichtung einen Balken mit einer Mehrzahl von Beschichtungsdüsen, der von einem haubenförmigen Schirm umgeben ist, aufweisen und kann der Balken um eine längsverlaufende Achse verdrehbar sein. Weiters sind vorzugsweise die im Balken angeordneten Düsen in unterschiedliche Lagen einstellbar.

Nach weiteren bevorzugten Merkmalen sind im Bereich des Randes der Beschichtungszone mit Heizeinrichtungen ausgebildete Thermoschilder vorgesehen und weist der Balken ein flüssigkeitsgekühltes Gehäuse auf, wobei dieses durch zwei im Querschnitt U-förmige, doppelwandige Teile gebildet sein kann. Schliesslich können neben den Thermoschildern Luftdüsen vorgesehen sein.

Die Erfindung ist nachstehend anhand von in der Zeichnung dargestellten Ausführungsbeispielen von erfindungsgemässen Vorrichtungen näher erläutert. Es zeigen:

Fig. 1 einen Wagen zur Aufnahme der Einrichtung zur Speisung einer Beschichtungsdüse,

Fig. 2 eine Beschichtungseinrichtung im Querschnitt,

Fig. 3 einen Querschnitt durch einen Balken zur Halterung von mehreren Beschichtungsdüsen, die

Fig. 4 und 5 eine etwas abgeänderte Beschichtungsdüse in zwei unterschiedlichen Ansichten, teilweise geschnitten und die Fig. 6 und 7 ein Detail der Fig. 4 in vergrösserter Darstellung.

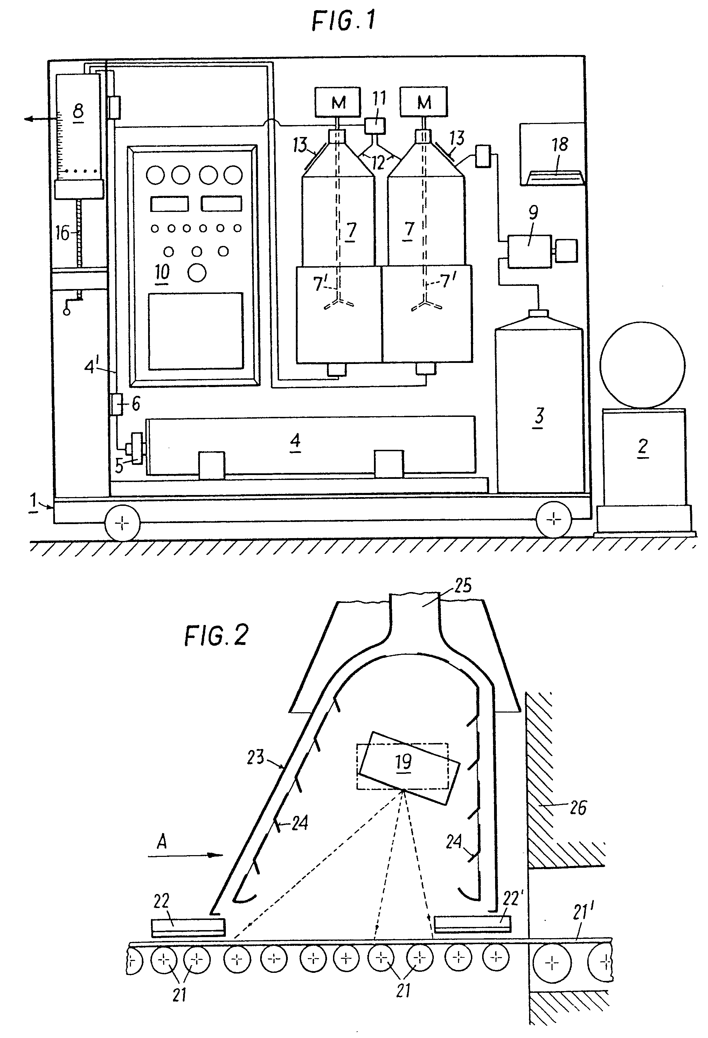

In Fig. 1 der Zeichnung ist ein Wagen 1 zur Aufnahme der Einrichtungen zur Speisung der Beschichtungsdüsen dargestellt. Dieser Wagen 1 trägt einen Säurebehälter 3, aus dem mittels einer Säurepumpe 9 in Aufbereitungsbehälter 7 Säure förderbar ist. Die Behälter 7 sind mit Motoren M zum Antrieb von innerhalb der Behälter 7 angeordneten Rührwerken 7' ausgebildet. Die Behälter 7 sind weiters über Leitungen mit einem Niveaubehälter 8 verbunden, von welchem die Flüssigkeit zu Beschichtungsdüsen gefördert wird. Der Wagen 1 trägt weiters mindestens einen Behälter 4 für ein Inertgas, insbesondere Stickstoff, der über Leitungen einerseits mit den Behältern 7 und andererseits mit dem Niveaubehälter 8 verbunden ist. Vom Wagen 1 ist zudem ein Schaltschrank 10 mit elektrischen Einrichtungen und eine mit Luftschleusen ausgebildete und dadurch gasdicht abgeschlossene Chemikalienwaage 18 getragen. Schliesslich ist in der Anlage ein Kompressor 2 vorgesehen.

In Fig. 2 sind die Walzen 21 einer Fördereinrichtung für ein Glasband 21' dargestellt, oberhalb welcher eine Beschichtungseinrichtung zur unter Druck erfolgenden Beaufschlagung des Glasbandes 21' mit einer Beschichtungsflüssigkeit angeordnet ist. Die Beschichtungseinrichtung besteht aus einem um eine Längsachse verschwenkbaren Düsenbalken 19, der von einer Schutzhaube 23 umgeben ist, um fremde Luftströmungen abzuhalten. In der Schutzhaube 23 sind Leitbleche 24 für Saugöffnungen vorgesehen, die über Verbindungskanäle mit einem innerhalb einer Abdeckhaube angeordneten Saugrohr 25 verbunden sind. Zwischen dem unteren Rand der Schutzhaube 23 und dem Glasband 21' befinden sich in Förderrichtung, die durch einen Pfeil A angedeutet ist, sowohl eingangsseitig als auch ausgangsseitig Thermoschilder 22, 22'. Diese dienen der Aufheizung oder der Abkühlung des Glasbandes, je nachdem ob es sich um horizontal oder um vertikal geführte Glasbänder handelt. Damit wird eine optimale und über die Breite des Glasbandes gleichmässige Temperatur geschaffen, wodurch die angestrebte Gleichmässigkeit in der Farbtönung beeinflusst wird.

Bei einer in der Zeichnung nicht dargestellten Beschichtung eines vertikalen Glasbandes, z.B. nach dem Fourcaultverfahren, ist keine Schutzhaube vorgesehen, weswegen die Rauchgase im Vorherd so geführt werden müssen, um zu verhindern, dass die Dissoziationsdämpfe in den Ziehturm gelangen. Dies erfolgt dadurch, dass ein bestehender Rauchkanal für den Abzug von Rauchgasen bei gestürzter Maschine unter Sog gestellt wird und gleichzeitig zur Vernichtung unverbrannter Säuredämpfe eine Brennerkammer oder Wärmeenergie anderer Art mit etwa 400°C eingeführt wird.

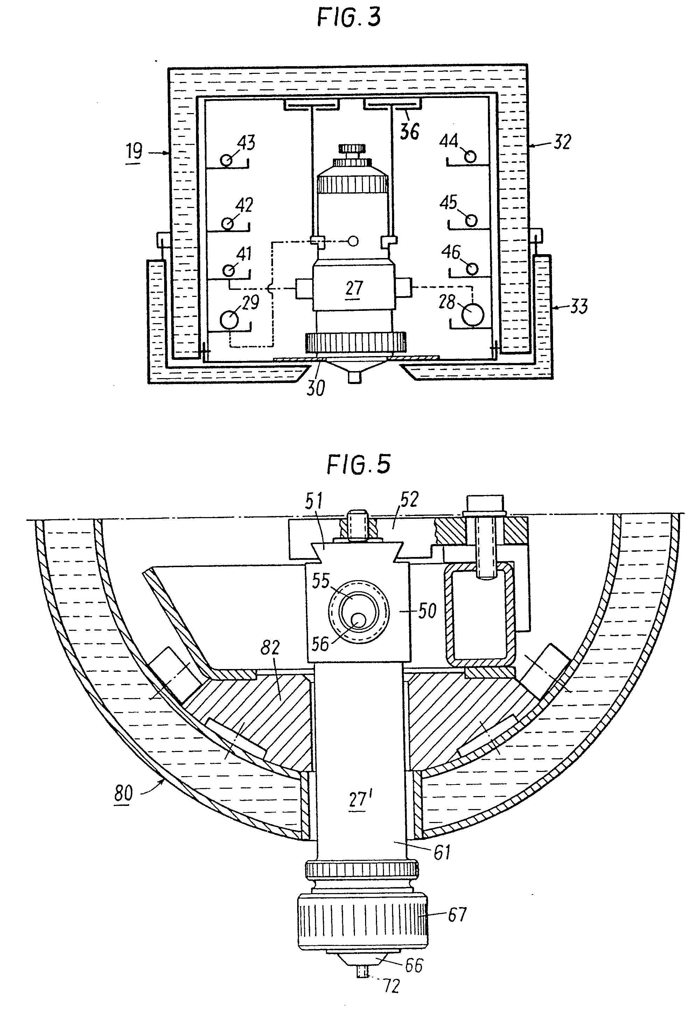

In Fig. 3 der Zeichnung ist beispielsweise eine Ausbildung des Düsenbalkens 19 genauer dargestellt. Dieser besteht aus zwei einander U-förmig überlappenden, durch Doppelmäntel gebildeten Gehäuseteilen 32, 33, die mit Wasser gefüllt sind. Diese Gehäuseteile sind nachstehend als oberer Wassermantel 32 und unterer Wassermantel 33 bezeichnet. Innerhalb dieses durch die Wassermäntel 32, 33 gebildeten Gehäuses sind in Längsrichtung des Balkens 19 nebeneinander mehrere Düsen 27 angeordnet, deren der Düsenöffnung zugeordneter Teil eine im unteren Wassermantel 33 vorgesehene Ausnehmung durchsetzt, wobei der Innenraum des Gehäuses durch eine nachstehend als Düsenschirm bezeichnete Platte 30 abgedeckt ist.

Im Inneren des Gehäuses sind den einzelnen Düsen 27 zugeordnete Speiseleitungen 41 bis 46 angeordnet, wobei die Speiseleitung 41 zur Speisung der dargestellten Düsen 27 dient. Diese Speiseleitungen können auch in einem Innenrohr gebündelt geführt sein, wobei am Ende jeder Leitung das Rohr mit einer Durchtrittsöffnung zur Zuführung an die jeweilige Düse ausgebildet ist. Statt einer Mehrzahl von Leitungen kann auch eine einzige Leitung, welche so bemessen ist, dass absolut gleichmässige Flüssigkeitsanspeisung zu jeder Düse gewährleistet ist, vorgesehen sein.

Weiters befindet sich im Inneren des Gehäuses 32, 33 eine Pressluftleitung 28, über welche die Düsen 27 mit Pressluft beaufschlagbar sind, wodurch der Druck, mit dem das Beschichten erfolgt, regelbar ist. Je nachdem, ob dieser höher oder niedriger ist, wird mehr oder weniger Beschichtungsflüssigkeit angesaugt.

Schliesslich befindet sich im Inneren des Gehäuses eine Steuerleitung 29, mittels welcher die Düsennadeln, sobald der Druck ein bestimmtes Minimum unterschreitet, so verstellbar sind, dass sie dicht schliessen, um ein Nachtropfen von Flüssigkeit zu verhindern. Wenn der Druck über das Normalmass erhöht wird, werden die Düsennadeln vorgeschoben, wodurch eventuell anhaftende Kristallisationen der Flüssigkeit entfernt werden (Selbstreinigung).

Um zu gewährleisten, dass die Beschichtungsflüssigkeit aus den einzelnen Düsen 27 unabhängig von ihrer Lage innerhalb des Düsenbalkens 19 und damit unabhängig von der Entfernung der Düsen vom Niveaubehälter 8 mit konstantem Druck austritt, sind die Flüssigkeitsleitungen vom Niveaubehälter 8 zu den einzelnen Düsen 27 gleich lang ausgebildet oder ist nach dem Niveaubehälter 8 ein Verteiler vorgesehen, von dem zu den Düsen 27 einzelne Leitungen führen, welche alle gleich lang sind.

Die Wirkungsweise der in den Fig. 1 bis 3 dargestellten Einrichtungen ist wie folgt:
Aus dem Inertgas enthaltenden Behälter 4 werden über eine Leitung 4', die ein Reduzierventil 5 und ein Zweiwegeventil 6 enthält, die Aufbereitungsbehälter 7 und der Niveaubehälter 8 vollständig mit Inertgas, insbesondere mit Stickstoff, gefüllt, um hierdurch nach Speisung dieser Behälter 7, 8 mit der Beschichtungsflüssigkeit einen Zutritt von Luftsauerstoff zu verhindern. Da während des gesamten Verfahrensablaufes ein Zutritt von Luftsauerstoff zur Beschichtungslösung ausgeschlossen werden soll, wird über das Reduzierventil 5 auch während der Entnahme von Beschichtungsflüssigkeit aus einem der Aufbereitungsbehälter 7 in diesen Aufbereitungsbehälter über ein Zweiwegeventil 11 und über Speiseleitungen 12 Inertgas zugeführt. Das Reduzierventil 5, das regelbar ist, ist beispielsweise auf 100 mb eingestellt. Hierauf wird mittels der Säurepumpe 9 aus dem Säurebehälter 3 in einen der beiden Aufbereitungsbehälter 7 eine organische Säure, z.B. Essigsäure, gepumpt, die im Behälter 7 auf etwa 50°C bis 60°C erhitzt wird. Weiters werden in den betreffenden Behälter 7 durch eine gasdichte Einwurföffnung 13 hindurch Chemikalien eingebracht, die in Abhängigkeit davon, welche Beschichtung erzielt werden soll, gewählt sind. Z.B. wird zur Erzielung einer goldglanzähnlichen Farbreaktion am Glas dreiwertiges Eisenchlorid und Zinnchlorid herangezogen. Für die Mengenbemessung wird hiezu die gasdicht abgeschlossene Waage 18 verwendet. Aufgrund exotherm verlaufender chemischer Reaktionen erfolgt eine Temperatursteigerung auf etwa 80°C bis 85°C. Die Temperatur in den Behältern 7 kann weiters mittels diesen zugeordneter Heizeinrichtungen gesteuert werden. Mittels der in den Behältern 7 angeordneten Rühreinrichtungen 7′ erfolgt zudem eine mechanische Vermischung der Bestandteile der Beschichtungsflüssigkeit. Hierauf wird die Beschichtungsflüssigkeit, insbesondere unter Wirkung des Inertgasdruckes, dem Niveaubehälter 8, an den oder nach welchem an einen Verteiler die Speiseleitungen 41 bis 46 der einzelnen Düsen 27 angeschlossen sind, zugeführt. Um in einfacher Weise eine Druckregelung und eine Mengenregelung an den Düsen 27 herbeizuführen, ist der Niveaubehälter 8 mittels einer Spindel 16 höhenverstellbar ausgebildet.

Die im Schaltschrank 10 zusammengefassten elektrischen Einrichtungen dienen zur Steuerung der Beschichtungsanlage. Ein weiters im Schaltschrank vorgesehener Monitor kann zur Überwachung der Beschichtungsgüte des Glasbandes 21′ herangezogen werden. Vorzugsweise sind weiters in der Zeichnung nicht dargestellte Auffangbehälter vorgesehen, die mit den Aufbereitungsbehältern 7 über Leitungen verbunden sind und die für Sicherheitszwecke zur Aufnahme der in den Behältern 7 befindlichen Beschichtungsflüssigkeit bzw. zur Aufnahme der Reinigung der Behälter 7 dienender Flüssigkeiten dienen. Die in der Zeichnung dargestellten Zweiwegeventile dienen zur Umschaltung der Speisung eines der beiden Behälter 7, zur Entnahme der Beschichtungsflüssigkeit aus einem der beiden Behälter 7 oder zur Speisung der Behälter 7 mit Inertgas aus einer von mehreren Inertgas enthaltenden Flaschen 4. Schliesslich ist die Vorderfront der Aufbereitungseinrichtung mit einem in der Zeichnung gleichfalls nicht dargestellten, abnehmbaren Hitzeschild zum Glasbereich hin ausgerüstet.

Die in Fig. 2 dargestellte Vorrichtung dient zur Beschichtung des Glasbandes 21′ mit der Flüssigkeit. Durch Speisung der Düsen 27 des Düsenbalkens 19 wird das Glasband 21′ in einer der Anzahl der Beschichtungsdüsen 27 entsprechenden Anzahl von Beschichtungskegeln mit Flüssigkeit beaufschlagt. Die Lage der Kegel kann durch Verschwenkung des Düsenbalkens 19 um eine in dessen Längsrichtung verlaufende Achse verstellt werden. Der Düsenbalken 19 ist auch der Höhe nach, d.h. im Abstand zur Glasoberfläche, verstellbar, um z.B. die Beaufschlagungslänge jeder Düse zu vergrössern oder zu verkleinern. Die Dichte der Beschichtung lässt sich weiters durch Erhöhung des Druckes der Flüssigkeit oder der den Düsen zugeführten Pressluft verändern.

Das in die Beschichtungseinrichtung einlaufende Glasband 21′ weist eine Temperatur von etwa 580°C bis 680°C auf. Die durch die Beschichtung entstehenden Verbrennungsgase werden an den Leitblechen 24 vorbei in die Schutzhaube 23 und über das Saugrohr 25 hindurch abgeführt. Um das Angebot an Luftsauerstoff zu erhöhen, sind an den innenseitigen Enden der Thermoschilder 22, 22′ Luftrohre mit Flachdüsen angeordnet, durch welche der Oberfläche des Glasbandes 21′ Heissluft zugeführt werden kann. Die Anspeisung dieser Luftdüsen kann über den Kompressor 2 oder über andere in Glashütten übliche lufttechnische Einrichtungen erfolgen. Um die hierdurch entstehenden Heizkosten zu minimieren, kann hierfür der durch die Glaserzeugung entstehende Wärmeüberschuss herangezogen werden.

Um die für die chemische Reaktion bei der Beschichtung eforderliche Temperatur zu erreichen bzw. diese über die Glasfläche aufrecht zu erhalten, sind weiters in den Thermoschildern 22, 22′ keramisch gehalterte Elektrostrahler vorgesehen, die den thermischen Erfordernissen entsprechend gesteuert sind. Bei freien Glasbändern, wie sie im senkrechten Ziehverfahren vorliegen, können auch auf der anderen Seite Thermoschilder angeordnet sein, welche zudem dazu dienen können, das Glasband abzukühlen, um zu verhindern, dass dieses abreisst. Das in Förderrichtung zweite Thermoschild 22′ dient vorzugsweise dazu, das durch die Beaufschlagung mit der Beschichtungsflüssigkeit abgekühlte Glasband 21′ auf denjenigen Temperaturwert anzuheben, der für den eingeleiteten Ionenaustausch bzw. für die Diffusion der Metalle erforderlich ist. Nach der Beschichtung fährt das Glasband 21′ in eine Einrichtung 26 für die Glasentspannung ein. Ein senkrechtes Glasband wird in den Ziehturm der Glasziehmaschine eingeführt.

Wie aus Fig. 3 der Zeichnung ersichtlich ist, ist der Düsenbalken 19 mit einem wassergekühlten Gehäuse 32, 33 ausgebildet, wodurch die in seinem Innenraum angeordneten Einrichtungen gegenüber der Abstrahlung vom Glasband 21′ thermisch isoliert sind. Zur Verstellung der einzelnen Düsen 27 innerhalb des Düsenbalkens 19 können diese entgegen der Wirkung einer Feder, durch die der Düsenschirm an die Berandung der Durchtrittsöffnung des unteren Wassermantels 33 angepresst wird, angehoben und längs einer an der inneren Oberseite des Düsenbalkens vorgesehene Führungseinrichtung 36 verschoben werden.

Wie dies vorstehend angeführt wurde, wird den einzelnen Düsen 27 über eine der Leitungen 41 bis 46 die Beschichtungsflüssigkeit zugeführt, die unter Einfluss der über die Leitung 28 zugeführten Pressluft mit dem entsprechenden Druck zwischen etwa 1,5 und 4,5 bar aus den Düsen ausgestossen wird. Durch eine zusätzliche Verstellschraube kann die Form des Beschichtungskegels der Düsen eingestellt werden. Um z.B. Flaschen zu beschichten, ist eine an sich bekannte Greif- und Dreheinrichtung zum Abführband des Flaschenautomaten notwendig. Dieser gegenüber wird der Düsenarm angeordnet, welcher vertikal steht und vorzugsweise nur eine Düse oder zwei Düsen aufweist. Je nach den örtlichen Verhältnissen muss dann Vorsorge getroffen werden, dass die Dissoziationsdämpfe durch ein Saugrohr hindurch abgeführt werden.

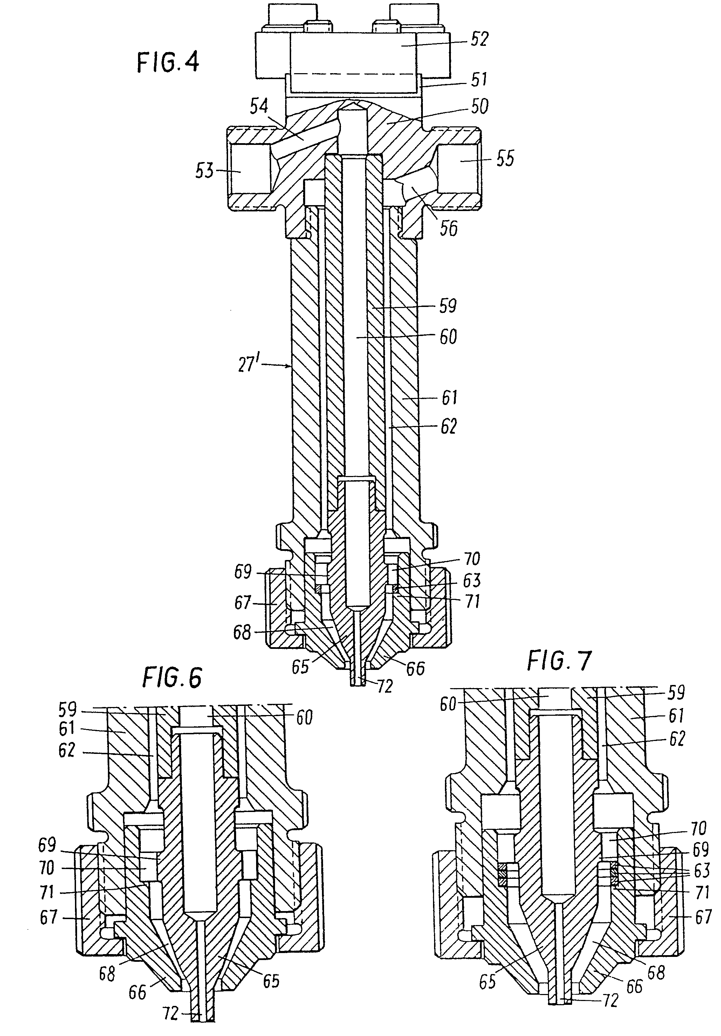

In den Fig. 4 und 5 der Zeichnung ist ein weiteres Ausführungsbeispiel einer Beschichtungsdüse 27' dargestellt. Diese Beschichtungsdüse besteht aus einem Trägerkörper 50, der an seinem in der Zeichnung oberen Ende mit einer im Querschnitt trapezförmigen Leiste 51 ausgebildet ist, welche Leiste in einer im Querschnitt gegengleichen Nut eines Haltebalkens 52 geführt und gegenüber diesem verschiebbar ist. Der Haltebalken 52 ist um eine Längsachse verdrehbar bzw. verschwenkbar. Die Seitenflächen der Leisten 51 dienen dabei als Führungsflächen. An der der Leiste 51 gegenüberliegenden Seite ist der Trägerkörper 50 mit zwei konzentrischen, in ihrem Durchmesser unterschiedlichen Bohrungen ausgebildet, in die ein inneres erstes Rohr 59 und im Abstand davon ein äusseres Rohr 61 eingesetzt sind. Der Trägerkörper 50 ist weiters mit einer seitlichen Anschlussbohrung 53 ausgebildet, die über einen Verbindungskanal 54 mit dem Innenraum 60 des Rohres 59 verbunden ist. Weiters ist der Trägerkörper 50 an der der Bohrung 53 gegenüberliegenden Seite mit einer zweiten Bohrung 55 ausgebildet, die über einen Kanal 56 mit dem zwischen den Rohren 59 und 61 gebildeten Ringraum 62 in Verbindung steht. Dies ist eine bekannte Ausführungsform derartiger Düsen.

An das freie Ende des inneren Rohres 59 ist unter Zwischenlage einer Dichtungsscheibe ein Düsenmundstück 65 angesetzt, das von einer Hülse 66 umgeben ist, die mittels einer Überwurfmutter 67 vom äusseren Rohr 61 getragen ist. Zwischen einem ringförmigen Absatz 71, der im Inneren der Hülse 66 vorgesehen ist, und einer vom Düsenmundstück 65 abragenden ringförmigen Rippe 69, die mit Drallnuten 70 ausgebildet ist, ist mindestens eine Distanzscheibe 63 angeordnet. Durch die Anzahl der Distanzscheiben 63 wird die Grösse des zwischen dem Düsenmundstück 65 und der Hülse 66 gebildeten Ringspaltes 68 und damit die Form des Sprühkegels des aus diesem Ringspalt 68 austretenden Mediums bestimmt. Durch die Drallnuten 70 erfolgt eine Führung des Luftstrahls über eine vorbestimmte Länge. Durch die mindestens eine Distanzscheibe 63 erfolgt keine Beeinflussung der durch die Drallnuten hindurchtretenden Luftmenge bzw. des Luftdruckes.

Die beiden Rohre 59 und 61 durchsetzen ein Gehäuse 80, das doppelwandig ausgebildet und mit einer Kühlflüssigkeit gefüllt ist und das für jede Düse 27' mit einer eigenen Bohrung ausgebildet ist. An die Innenwand des Gehäuses 80 schliesst ein Block 82 aus gut wärmeleitendem Material an, der als Kühlschuh dient. Die einzelnen Bestandteile der Düse 27' sind aus Nickel, Stahl, Kunststoff oder Tantal gefertigt. Da die chemische und mechanische Resistenz des Düsenmundstückes 65 von entscheidender Bedeutung ist, ist dieses vorzugsweise aus Tantal oder Niob gefertigt.

Die Wirkungsweise dieser Einrichtung ist wie folgt: Eine Mehrzahl derartiger Sprühdüsen 27' sind mittels der Leiste 51 im Tragbalken 52 ein- und feststellbar gehaltert. Da diese Sprühdüsen im Tragbalken 52 verstellbar sind, ist ihr gegenseitiger Abstand einstellbar. Über nicht dargestellte flexible Leitungen wird der Anschlussbohrung 55 Luft oder ein anderes der Zerstäubung dienendes Gas zugeführt. Die Lösung tritt aus der Bohrung 53 über den Kanal 54 in den Innenraum 60 des inneren Rohres 59 über und gelangt aus diesem in das Düsenmundstück 65, dessen Bohrung 72 sie durchsetzt. Das der Anschlussbohrung 55 zugeführte Zerstäubungsgas tritt über den Kanal 56 in den zwischen den Rohren 59 und 61 gebildeten Ringraum 62 über und gelangt über die Drallbohrungen 70, die in der Rippe 69 vorgesehen sind, in den zwischen dem Düsenmundstück 65 und der Hülse 66 gebildeten Ringraum 68, aus dem es austritt. Durch die Charakteristik der aus dem Ringraum 68 austretenden Luft wird der Sprühkegel der Lösung bestimmt. Diese Charakteristik wird – wie erwähnt – durch die Anzahl der Distanzscheiben 63 beeinflusst. Das flüssigkeitsgekühlte Gehäuse 80 dient dazu, die Halterung der Düse und der Zuleitungen von der vom heissen Glasband, dessen Oberfläche beschichtet werden soll, abgestrahlten Wärme abzuschirmen.

Da der Haltebalken 52 und mit diesem die Düsen verschwenkbar sind, da weiters die Charakteristik der Sprühkegel der einzelnen Düsen einstellbar ist und da zudem die einzelnen Düsen in ihrem gegenseitigen Abstand einstellbar sind, ist die Lösung mit der erforderlichen Gleichmässigkeit aufsprühbar, um die angestrebte Gleichmässigkeit in der Beschichtung zu erzielen.

In den Fig. 6 und 7 ist eine derartige Sprühdüse 27' in vergrössertem Massstab dargestellt. Dabei ist gemäss Fig. 6 zwischen dem Düsenmundstück 65 und der Hülse 66 keine Distanzscheibe angeordnet, wogegen gemäss Fig. 7 drei Distanzscheiben 63 angeordnet sind, wodurch der Ringspalt 68 wesentlich verändert ist.

**Patentansprüche**

1. Verfahren zur Herstellung von Glasbeschichtungen durch Aufbringen von in organischer Säure gelösten Metallchloriden, dadurch gekennzeichnet, dass die Herstellung und die Förderung der Beschichtungsflüssigkeit bis zur Sprühdüse (27) unter Ausschluss von Sauerstoff erfolgt.

2. Verfahren nach Anspruch 1, dadurch gekennzeichnet, dass die Behälter (7, 8) zur Aufnahme der Beschichtungsflüssigkeit unter Druck eines inerten Gases stehen.

3. Verfahren nach einem der Ansprüche 1 und 2, dadurch gekennzeichnet, dass die Einbringung der Chemikalien in die Behälter (7) für die Beschichtungsflüssigkeit durch luftdichte Förderschleusen (13) hindurch erfolgt.

4. Vorrichtung zur Durchführung des Verfahrens nach einem der Ansprüche 1 bis 3, dadurch gekennzeichnet, dass eine Einrichtung zur Herstellung der Beschichtungsflüssigkeit unter Ausschluss von Sauerstoff vorgesehen ist, von der aus eine Beschichtungseinrichtung speisbar ist.

5. Vorrichtung nach Anspruch 4, dadurch gekennzeichnet, dass die Beschichtungseinrichtung einen Balken (19) mit einer Mehrzahl von Beschichtungsdüsen (27), der von einem haubenförmigen Schirm (23) umgeben ist, aufweist.

6. Vorrichtung nach Anspruch 5, dadurch gekennzeichnet, dass der Düsenbalken (19) um eine längsverlaufende Achse verdrehbar bzw. verschwenkbar ist.

7. Vorrichtung nach einem der Ansprüche 5 und 6, dadurch gekennzeichnet, dass die im Düsenbalken (19) angeordneten Düsen (27) in unterschiedliche Lagen einstellbar, insbesondere in ihrem Abstand voneinander einstellbar sind.

8. Vorrichtung nach einem der Ansprüche 4 bis 7, dadurch gekennzeichnet, dass im Bereich des Randes der Beschichtungszone mit Heizeinrichtungen ausgebildete Thermoschilder (22, 22') vorgesehen sind.

9. Vorrichtung nach einem der Ansprüche 5 bis 8, dadurch gekennzeichnet, dass der Düsenbalken (19) ein flüssigkeitsgekühltes Gehäuse (32, 33) aufweist.

10. Vorrichtung nach einem der Ansprüche 4 bis 9, dadurch gekennzeichnet, dass neben den Thermoschildern (22, 22') Luftdüsen vorgesehen sind.

11. Vorrichtung nach Anspruch 7, dadurch gekennzeichnet, dass die Düsen (27') mittels schwalbenschwanzförmiger Halterungen (51) im Düsenbalken (52) geführt und in ihrer Lage einstellbar sind.

12. Vorrichtung nach Anspruch 5, dadurch gekennzeichnet, dass die Düsen (27') mit zwei konzentrischen Kanälen (72, 68) für die Beschichtungsflüssigkeit und für ein gasförmiges Medium ausgebildet sind, wobei deren Sprühcharakteristik durch Veränderung des Querschnittes bzw. des Verlaufes des Kanals (68) für das gasförmige Medium einstellbar ist.

13. Vorrichtung nach Anspruch 12, dadurch gekennzeichnet, dass die Düsen (27') mit einem zentralen inneren Kanal (72) für die Beschichtungsflüssigkeit und einen diesen umgebenden, ringförmigen Kanal (68) für das gasförmige Medium ausgebildet sind, wobei das Düsenmundstück (65) an seiner Aussenseite einen konisch verlaufenden Bereich aufweist und eine das Düsenmundstück (65) umgebende Hülse (66) gegenüber diesem mittels Distanzscheiben (63) in ihrer Lage einstellbar ist.

14. Vorrichtung nach Anspruch 13, dadurch gekennzeichnet, dass das Düsenmundstück (65) aus Tantal oder Niob gefertigt ist.

15. Vorrichtung nach Anspruch 14, dadurch gekennzeichnet, dass das Düsenmundstück (65) an seinem äusseren Umfang mit sich im Verlauf des Ringkanals (68) befindlichen Drallnuten (70) ausgebildet ist.

**Claims**

1. Process for the production of glass coatings by application of metal chlorides dissolved in an organic acid, characterised in that the production and the transport of the coating fluid to the spray nozzle (27) are carried out in the absence of oxygen.

2. Process according to Claim 1, characterised in that the containers (7, 8) for receiving the coating fluid are pressurised using an inert gas.

3. Process according to one of Claims 1 and 2, characterised in that the chemicals are introduced into the containers (7) for the coating fluid through airtight transport sluices (13).

4. Apparatus for carrying out the process according to one of Claims 1 to 3, characterised in that a unit for preparing the coating fluid in the absence of oxygen is provided, from which a coating apparatus can be fed.

5. Apparatus according to Claim 4, characterised in that the coating apparatus has an arm (19) which possesses a plurality of coating nozzles (27) and is surrounded by a hood-like screen (23).

6. Apparatus according to Claim 5, characterised in that the nozzle-containing arm (19) can be rotated or swivelled about a longitudinal axis.

7. Apparatus according to one of Claims 5 and 6, characterised in that the nozzles (27) located in the nozzle-containing arm (19) can be adjusted to various positions, and in particular are adjustable in respect of their distance from one another.

8. Apparatus according to one of Claims 4 to 7, characterised in that heat shields (22, 22') equipped with heating devices are provided in the region of the edge of the coating zone.

9. Apparatus according to one of Claims 5 to 8, characterised in that the nozzle-containing arm (19) has a liquid-cooled housing (32, 33).

10. Apparatus according to one of Claims 4 to 9, characterised in that, in addition to the heat shields (22, 22') air nozzles are provided.

11. Apparatus according to Claim 7, characterised in that the nozzles (27') are guided in the nozzle-containing arm (52), and can be adjusted in their position, by means of dovetail-like holders (51).

12. Apparatus according to Claim 5, characterised in that the nozzles (27) are provided with two concentric channels (72, 68) for the coating fluid and for a gaseous medium, and their spray characteristics can be adjusted by changing the cross-section or the path of the channel (68) for the gaseous medium.

13. Apparatus according to Claim 12, characterised in that the nozzles (27') are provided with a central inner channel (72) for the coating fluid and, surrounding this channel, an annular channel (58) for the gaseous medium, and the nozzle mouthpiece (65) has a conical section on its outside, and a sleeve (66) surrounding the nozzle mouthpiece (65) to be adjusted in its position with respect to this mouthpiece by means of spacers (63).

14. Apparatus according to Claim 13, characterised in that the nozzle mouthpiece (65) is manufactured from tantalum or niobium.

15. Apparatus according to Claim 14, characterised in that the nozzle mouthpiece (65) is provided, on its outer periphery, with spiral channels (70) located in the path of the annular channel (68).

**Revendications**

1. Procédé de préparation d'enduits de verre par application de chlorures métalliques dissous dans un acide organique, caractérisé en ce que la préparation et le transport du liquide d'enduction jusqu'au pulvérisateur (27) a lieu à l'abri de l'oxygène.

2. Procédé suivant la revendication 1, caractérisé en ce que les récipients (7, 8) destinés à recevoir le liquide d'enduction sont sous la pression d'un gaz inerte.

3. Procédé suivant une des revendications 1 et 2, caractérisé en ce que l'introduction des produits chimiques dans les récipients (7) prévus pour le liquide d'enduction a lieu à travers un sas de circulation (13) étanche à l'air.

4. Dispositif pour la réalisation du procédé suivant une des revendications 1 à 3, caractérisé en ce qu'on prévoit un appareil en vue de préparer le liquide d'enduction à l'abri de l'oxygène, appareil au départ duquel un appareil d'enduction peut être alimenté.

5. Dispositif suivant la revendication 4, caractérisé en ce que l'appareil d'enduction comporte une barre (19) pourvue de plusieurs pulvérisateurs d'enduction (27), cette barre étant entourée d'un écran (23) sous forme d'un capot.

6. Dispositif suivant la revendication 5, caractérisé en ce que la barre à pulvérisateurs (19) peut tourner ou pivoter sur un axe longitudinal.

7. Dispositif suivant une des revendications 5 et 6, caractérisé en ce que les pulvérisateurs (27) disposés dans la barre (19) peuvent être réglés dans des positions différentes, en particulier, dans leur écartement mutuel.

8. Dispositif suivant une des revendications 4 à 7, caractérisé en ce que, près du bord de la zone d'enduction, on prévoit des boucliers thermiques (22, 22') réalisés avec des appareils de chauffage.

9. Dispositif suivant une des revendications 5 à 8, caractérisé en ce que la barre à pulvérisateurs (19) comporte un logement (32, 33) refroidi par un liquide.

10. Dispositif suivant une des revendications 4 à 9, caractérisé en ce que, outre les boucliers thermiques (22, 22'), on prévoit des buses d'air.

11. Dispositif suivant la revendication 7, caractérisé en ce que les pulvérisateurs (27') sont guidés dans la barre (52) où leur position peut être réglée au moyen de supports en forme de queue d'aronde (51).

12. Dispositif suivant la revendication 5, caractérisé en ce que les pulvérisateurs (27') sont réalisés avec deux canaux concentriques (72, 68) pour le liquide d'enduction et pour un milieu gazeux, leur caractéristique de pulvérisation pouvant être réglée en modifiant la section transversale ou l'allure du canal (68) prévu pour le milieu gazeux.

13. Dispositif suivant la revendication 12, caractérisé en ce que les pulvérisateurs (27') sont réalisés avec un canal intérieur central (72) pour le liquide d'enduction et un canal annulaire (68) entourant ce canal (72) et prévu pour le milieu gazeux, l'embouchure (65) d'un pulvérisateur comportant, sur sa face extérieure, une zone d'allure conique, tandis que la position d'une douille (66) entourant l'embouchure (65) peut être réglée vis-à-vis de cette dernière au moyen de rondelles d'écartement (63).

14. Dispositif suivant la revendication 13, caractérisé en ce que l'embouchure (65) des pulvérisateurs est réalisée en tantale ou en niobium.

15. Dispositif suivant la revendication 14, caractérisé en ce que, sur sa périphérie extérieure, l'embouchure (65) des pulvérisateurs est réalisée avec des rainures hélicoïdales (70) s'étendant dans le canal annulaire (68).

## FIG.1

## FIG.2

# FIG. 3

19
32
43
44
36
42
45
41
46
29
27
28
33
30

# FIG. 5

51
52
55
56
50
82
27'
80
61
67
66
72

0 056 795

FIG.4

FIG.6

FIG.7